# FASCICULE DE BREVET EUROPEEN

(11) **EP 2 658 779 B1**
(45) Date de publication et mention de la délivrance du brevet: **22.10.2014**
(21) Numéro de dépôt: 11817403.6
(22) Date de dépôt: 20.12.2011
(51) Int. Cl.: B64D 27/26, B64D 27/18

(54) **DISPOSITIF DE SUSPENSION D'UN TURBOREACTEUR**
AUFHÄNGUNGSVORRICHTUNG FÜR EIN TURBOJET-TRIEBWERK
DEVICE FOR SUSPENDING A TURBOJET ENGINE

(30) Priorité: 27.12.2010 FR 1061281
(43) Date de publication de la demande: 06.11.2013
(73) Titulaire: SNECMA, 75015 Paris (FR)
(72) Inventeur: BALK, Wouter, F-77000 Melun (FR); VINCENT, Thomas, Alain, Christian, F-91120 Palaiseau (FR)
(74) Mandataire: Intès, Didier Gérard André
(86) Numéro de dépôt international: PCT/FR2011/053066
(87) Numéro de publication internationale: WO 2012/089956

(56) Documents cités:
- FR-A1- 2 920 178
- FR-A1- 2 925 016
- US-A1- 2006 280 551

## Description

L'invention se rapporte à un dispositif de suspension d'un turboréacteur, notamment sous l'aile et il concerne plus particulièrement un perfectionnement d'une attache entre le turboréacteur et le pylône de liaison à la structure de l'avion. Une attache de ce genre dite médiane est plus particulièrement destinée à la reprise de poussée. Une telle attache est par exemple agencée entre une attache avant reliée au carter de la soufflante et une attache arrière reliée à la virole extérieure du carter d'échappement.

Dans un turboréacteur à double flux tel que décrit, par exemple dans FR 2 925 016, l'air entrant est comprimé par le rotor de soufflante puis divisé en deux flux dits primaire et secondaire, cylindriques et coaxiaux. Le flux secondaire contourne le moteur proprement dit et est éjecté en aval pour assurer une grande partie de la poussée. Le flux primaire subit une compression avant d'atteindre la chambre de combustion où il se mélange au carburant. Le mélange s'enflamme pour produire les gaz chauds qui alimentent des étages successifs de turbines entraînant les compresseurs et la soufflante. Le flux primaire est aussi éjecté au centre de la veine d'air froid pour fournir une partie de la poussée. On appelle taux de dilution le rapport des débits entre flux secondaire et flux primaire. Le rapport des diamètres entre le carter de soufflante et celui du carter du moteur est un paramètre important pour obtenir un taux de dilution élevé.

Un tel turboréacteur est fixé par une structure support appelée pylône, par exemple sous l'aile.

Lorsque l'on cherche à augmenter le taux de dilution, on est amené à définir un turboréacteur dans lequel la soufflante prend une place très importante. Pour pouvoir installer un tel turboréacteur de très grand diamètre, il faut rapprocher l'axe du turboréacteur de la structure qui le porte (typiquement l'aile). Par conséquent, l'espace disponible pour le pylône et la fixation des attaches à celui-ci en est réduit.

Le document antérieur précité décrit notamment une attache médiane isostatique dite "à protection totale" apte à empêcher la séparation du turboréacteur de son pylône. Cette attache médiane comporte notamment deux bielles agencées symétriquement de part et d'autre d'un plan médian vertical entre le moyeu du carter avant et l'attache arrière ou directement sur le pylône, au voisinage de cette attache arrière.

Ces deux biellettes sont montées par des liaisons articulées sur un palonnier lui-même articulé à une embase fixée à l'attache arrière ou au pylône.

Le palonnier a une largeur transversale telle qu'elle permet également des liaisons articulées, avec jeu, aux extrémités, avec des prolongements latéraux de l'embase. Dans le cas de rupture d'une biellette, l'un des jeux existants entre l'un des prolongements et le palonnier est consommé. Les forces sont redistribuées et passent alors par la biellette restante. Si la rupture a lieu au niveau de la liaison centrale entre le palonnier et l'embase, les deux prolongements reprennent les efforts. C'est ainsi que se trouve réalisée une attache dite "à protection totale" puisque la rupture de n'importe quel élément se traduit par une nouvelle répartition des chemins de force, empêchant la rupture totale de l'attache.

Cependant, pour faire face à une augmentation de diamètre de la soufflante, il est souhaitable de réduire l'encombrement d'une telle attache, sous le pylône. De plus, dans le système connu décrit dans FR 2 925 016, il faut prévoir en plus un espace de désengagement entre le pylône et le turboréacteur pour pouvoir démonter l'attache car celle-ci est orientée globalement radialement par rapport à l'axe moteur. En outre, cette attache connue est relativement complexe et coûteuse.

L'invention vise à remédier à tous ces problèmes.

Plus particulièrement, l'invention concerne en premier lieu un dispositif de suspension d'un turboréacteur d'avion dans lequel ledit turboréacteur est raccordé à un pylône fixé à la structure de l'avion par des attaches à biellettes articulées, chacune reliant ledit pylône à un carter dudit turboréacteur, caractérisé en ce qu'une telle attache comporte un support d'axe fixé audit pylône et comprenant trois branches espacées munies de passages traversés par ledit axe, ledit support d'axe étant fixé audit pylône de façon que ledit axe soit orienté globalement parallèlement à une direction tangentielle dudit carter, en ce que ledit axe est monté articulé par rotule à la branche centrale dudit support, en ce qu'il traverse avec le jeu les deux autres branches et en ce que deux biellettes précitées sont agencées symétriquement par rapport à un plan médian dudit support et raccordées avec articulation audit carter et audit axe.

Ainsi, le fait que l'axe d'articulation de l'attache à protection totale soit désormais orienté essentiellement tangentiellement par rapport au carter, permet de rapprocher ladite attache du pylône, toutes choses égales par ailleurs, sans affecter la facilité de désengagement puisque l'axe est démontable latéralement.

De plus, comme on le verra plus loin, le support de l'axe peut être simplifié et son coût peut être abaissé en adoptant une structure modulaire simple, ledit support étant réalisé par l'assemblage côte-à-côte, de trois pièces identiques ou sensiblement identiques, matérialisant les trois branches précitées.

Avantageusement, chaque biellette est directement articulée audit axe. Elle peut être directement raccordée par rotule à cet axe.

Selon un mode de réalisation possible, ladite rotule d'articulation de la biellette audit axe se situe au voisinage d'une extrémité correspondante de cet axe et de l'autre côté de l'une desdites deux autres branches par rapport à ladite branche centrale dudit support.

Ainsi, lesdites deux autres branches, qui n'ont pas normalement d'interaction avec les éléments de l'attache, puisqu'un jeu prédéterminé est défini entre leurs alésages et l'axe du palonnier, permet d'obtenir la redondance nécessaire pour la reprise des efforts en cas de rupture d'un élément de l'attache.

De plus, le maître couple est réduit par rapport à la solution connue. Enfin, on réduit la largeur de l'attache, ce qui, s'il s'agit de l'attache médiane, diminue la trainée dans la veine d'air frais de la soufflante. Les carénages entourant l'attache dans la veine sont aussi d'encombrement réduits. On augmente donc ainsi la section du flux secondaire et par conséquent le rendement. Enfin, on diminue la masse du système d'attache.

Le principe de l'invention s'applique notamment à l'attache médiane mais il peut être transposé aux autres attaches, avant et/ou arrière.

L'invention sera mieux comprise et d'autres avantages de celle-ci apparaîtront mieux à la lumière de la description qui va suivre d'un mode de réalisation conforme à son principe, donnée uniquement à titre d'exemple et faire en référence aux dessins annexés dans lesquels :
- la figure 1 est une vue schématique en élévation d'un turboréacteur raccordé à un pylône solidaire de l'avion, par exemple monté sous une aile ;
- la figure 2 est une vue de détail en perspective d'un élément constitutif du support de l'attache, destiné à être fixé au pylône ; et
- la figure 3 est une vue de détail de l'attache, du côté du pylône.

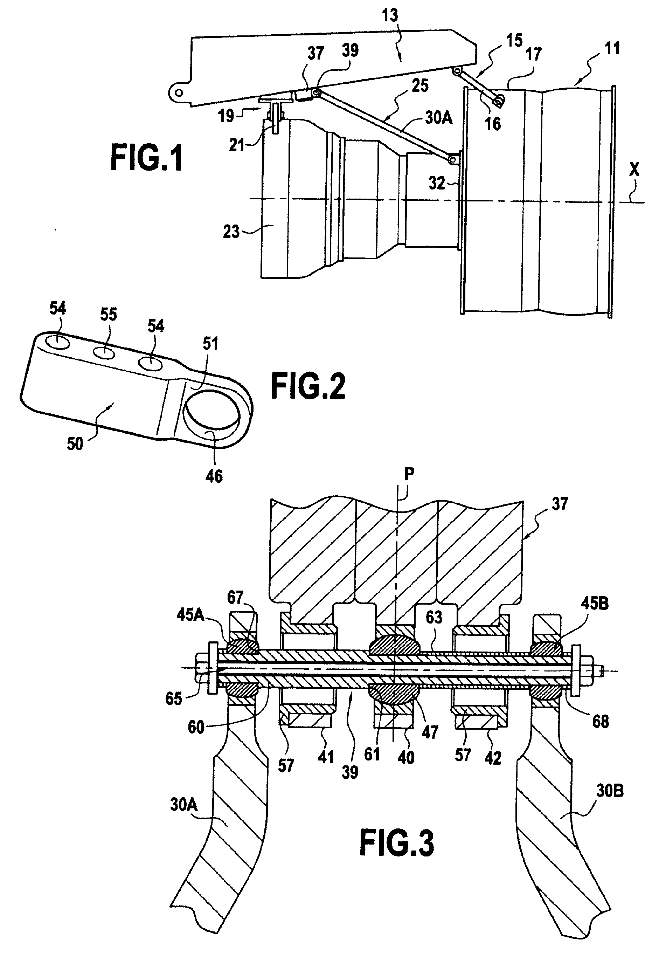

Sur la figure 1, on a représenté un turboréacteur 11 rattaché à un pylône 13 lui-même fixé à l'avion, ici sous une aile, non représentée. Le turboréacteur est rattaché au pylône par trois attaches. Une attache avant 15 comprend deux biellettes 16 distantes l'une de l'autre, divergentes et articulées à leurs extrémités. Elles sont connectées entre l'avant du pylône 13 et la virole externe 17 du carter de soufflante. Une attache arrière 19 comprend aussi deux biellettes 21 articulées entre le pylône 13 et le carter d'échappement 23. Une attache médiane 25 s'étend entre les deux attaches avant et arrière. L'attache médiane 25 comprend deux biellettes 30A, 30B raccordées entre le pylône 13 et un carter du turboréacteur, plus particulièrement ici le moyeu 32 d'un carter intermédiaire agencé à l'intérieur de la virole de soufflante et supportant la partie centrale avant du turboréacteur. L'invention est ici plus particulièrement décrite en référence à la structure de l'attache médiane.

Cette attache médiane 25 est dédiée à la reprise des efforts de poussée. Les biellettes 30A, 30B sont sollicitées en traction en situation de fonctionnement normal du turboréacteur et en compression dans le cas d'un fonctionnement en inversion de poussée dudit turboréacteur.

Conformément à l'invention, cette attache 25 dite médiane comporte un support d'axe 37 fixé au pylône 13 et auquel un axe 39 de palonnier est articulé. Ce support comprend trois branches 40, 41, 42 espacées munies de passages 46 alignés traversés par ledit axe 39. Ledit support d'axe 37 est fixé audit pylône de façon que l'axe 39 soit orienté globalement parallèlement à une direction tangentielle dudit carter et, perpendiculaire à l'axe moteur X. De plus, cet axe 39 est monté articulé par rotule 47 à la branche centrale 40 du support 37. Il traverse avec jeu les deux autres branches 41, 42. Les deux biellettes 30A, 30B précitées sont agencées symétriquement par rapport à un plan médian P du support (passant par la branche centrale) et raccordées avec articulation par leurs extrémités respectives audit carter (le moyeu 32) et audit axe 39.

Sur la figure 3, dans l'exemple, chaque biellette 30A, 30B est directement raccordée par rotule 45A, 45B aux extrémités de l'axe 39, c'est-à-dire à l'extérieur des passages définis dans les deux branches 41, 42. On pourrait aussi articuler les deux biellettes à une pièce intermédiaire formant une chape engagée de part et d'autre de la branche centrale du support, pour obtenir une attache globalement plus étroite dans la veine secondaire.

Comme représenté, le support 37 est défini à partir de trois pièces 50, ici rigoureusement identiques, accolées les unes aux autres, chaque pièce (illustrée en fig. 2) définissant une branche précitée, grâce à un amincissement 51 de celle-ci. Les trois pièces accolées sont fixées au pylône 13 de façon telle que l'axe 39 s'étend sensiblement horizontalement et transversalement par rapport à l'axe X du moteur, donc parallèlement à une direction tangentielle du turboréacteur. Pour la fixation au pylône, chaque pièce comporte deux trous 54 pour le passage de boulons et un trou 55 pour le positionnement, au moyen d'un pion solidaire du pylône. Les trois pièces 50 sont boulonnées côte à côte sur le pylône de façon que lesdites branches soient orientées sensiblement radialement vers le turboréacteur.

Les trois pièces 50 peuvent en outre être boulonnées ensemble transversalement à ces trous.

Selon une caractéristique remarquable, les deux passages 46 des deux branches 41, 42 situées de part et d'autre de la branche centrale 40 sont des alésages recevant des douilles 57. Ces douilles sont d'épaisseur choisie et sont montées dans les alésages pour déterminer le jeu souhaité entre l'axe 39 et chacune de ces branches 41, 42. Le réglage du jeu se fait donc en adaptant les douilles. Plus les douilles sont épaisses, plus le jeu est réduit.

Chaque rotule 45A 45B est immobilisée au voisinage d'une extrémité correspondante de l'axe 39 et de l'autre côté de l'une desdites deux autres branches 41, 42, par rapport à ladite branche centrale 40 dudit support 37.

En considérant plus particulièrement la figure 3, on constate que l'axe 39 est avantageusement composé d'un tube 60 comprenant deux tronçons de diamètres différents qui définissent un épaulement 61 dans la partie centrale. Cet épaulement 61 forme une première butée de positionnement de la rotule 47 de la branche centrale par laquelle l'axe 39 s'articule par rapport au support 37. Le tronçon de plus petit diamètre est recouvert d'un manchon 63 formant une deuxième butée pour le positionnement de ladite rotule de la branche centrale. Le tube 60, ladite rotule 47 et ledit manchon 63, notamment, sont maintenus assemblés par un boulonnage axial 65 traversant ledit tube 60.

L'extrémité de la portion de plus grand diamètre du tube comporte aussi un épaulement 67 de positionnement de la rotule 45A associée à l'une des biellettes. A l'autre extrémité, la rotule 45B de l'autre biellette est positionnée en appui contre l'extrémité du manchon d'une part et contre une bague 68 d'autre part. Tout cet assemblage est stabilisé par le boulonnage axial 60.

Comme mentionné plus haut, l'invention est transposable à d'autres attaches que ladite attache médiane.

## Revendications

1. Dispositif de suspension d'un turboréacteur d'avion dans lequel ledit turboréacteur est raccordé à un pylône fixé à la structure de l'avion par des attaches à biellettes articulées, chacune reliant ledit pylône à un carter dudit turboréacteur, **caractérisé en ce qu'**une telle attache comporte un support (37) d'axe apte à être fixé audit pylône et comprenant trois branches (40, 41, 42) espacées munies de passages (46) traversés par ledit axe (39), ledit support d'axe étant apte à être fixé audit pylône de façon que ledit axe (39) soit orienté globalement parallèlement à une direction tangentielle dudit carter, **en ce que** ledit axe est monté articulé par rotule (47) à la branche centrale (40) dudit support, **en ce qu'**il traverse avec le jeu les deux autres branches (41, 42) et **en ce que** deux biellettes (30A, 30B) précitées sont agencées symétriquement par rapport à un plan médian dudit support et aptes à être raccordées avec articulation audit carter et audit axe.

2. Dispositif selon la revendication 1, **caractérisé en ce que** chaque biellette (30A, 30B) est directement raccordée par rotule dudit axe.

3. Dispositif selon la revendication 2, **caractérisé en ce que** ladite rotule (45A, 45B) d'articulation de la biellette audit axe se situe au voisinage d'une extrémité correspondante de cet axe et de l'autre côté de l'une desdites deux autres branches (41, 42) par rapport à ladite branche centrale (40) dudit support.

4. Dispositif selon l'une des revendications précédentes, **caractérisé en ce que** ledit support (37) est défini à partir de trois pièces (50) sensiblement identiques accolées les unes aux autres, chaque pièce définissant une branche précitée.

5. Dispositif selon l'une des revendications précédentes, **caractérisé en ce que** lesdits deux passages des deux branches situées de part et d'autre de la branche centrale sont des alésages et que des douilles (57) d'épaisseur choisie sont montées dans ces alésages, pour déterminer le jeu souhaité entre l'axe et chacune de ces branches.

6. Dispositif selon l'une des revendications précédentes, **caractérisé en ce que** ledit axe (39) comprend un tube (60) comportant deux tronçons de diamètres différents définissant un épaulement (61) dans la partie centrale, **en ce que** cet épaulement forme une première butée pour le positionnement de la rotule (47) de la branche centrale, **en ce que** le tronçon de plus petit diamètre est recouvert d'un manchon (63) formant une deuxième butée pour le positionnement de ladite rotule (47) de la branche centrale, ledit tube, ladite rotule et ledit manchon, notamment, étant maintenus assemblés par un boulonnage axial (65) traversant ledit tube.

## Patentansprüche

1. Vorrichtung zur Aufhängung eines Turbostrahltriebwerks eines Flugzeugs, bei dem das Turbostrahltriebwerk an einen Mast angeschlossen ist, der an der Struktur des Flugzeugs durch Gelenkstangenverbindungselemente befestigt ist, wobei ein jedes den Mast mit einem Gehäuse des Turbostrahltriebwerks verbindet, **dadurch gekennzeichnet, dass** ein solches Verbindungselement einen Achsenhalter (37) umfasst, der geeignet ist, an dem Mast befestigt zu werden und der drei beabstandete Schenkel (40, 41, 42) umfasst, die mit von der Achse (39) durchgriffenen Durchgängen (46) versehen sind, wobei der Achsenhalter geeignet ist, an dem Mast derart befestigt zu werden, dass die Achse (39) im Ganzen parallel zu einer tangentialen Richtung des Gehäuses ausgerichtet ist, dass die Achse an dem mittleren Schenkel (40) des Halters mittels Kugelgelenk (47) gelenkig angebracht ist, dass sie die beiden anderen Schenkel (41, 42) mit Spiel durchgreift und dass zwei vorgenannte Stangen (30A, 30B) zu einer Mittelebene des Halters symmetrisch angeordnet und geeignet sind, an das Gehäuse und an die Achse gelenkig angeschlossen zu werden.

2. Vorrichtung nach Anspruch 1, **dadurch gekennzeichnet, dass** jede Stange (30A, 30B) direkt mittels Kugelgelenk der Achse angeschlossen ist.

3. Vorrichtung nach Anspruch 2, **dadurch gekennzeichnet, dass** das Kugelgelenk (45A, 45B) zum Anlenken der Stange an die Achse in der Nähe eines entsprechenden Endes dieser Achse und auf der anderen Seite von einem der beiden anderen Schenkel (41, 42), bezogen auf den mittleren Schenkel (40) des Halters, gelegen ist.

4. Vorrichtung nach einem der vorhergehenden Ansprüche, **dadurch gekennzeichnet, dass** der Halter (37) aus drei im Wesentlichen identischen, aneinandergesetzten Teilen (50) definiert ist, wobei jedes Teil einen vorgenannten Schenkel definiert.

5. Vorrichtung nach einem der vorhergehenden Ansprüche, **dadurch gekennzeichnet, dass** die beiden Durchgänge der beiden Schenkel, die beiderseits des mittleren Schenkels gelegen sind, Bohrungen sind und dass Hülsen (57) mit gewählter Dicke in diesen Bohrungen angebracht sind, um das gewünschte Spiel zwischen der Achse und einem jeden dieser Schenkel festzulegen.

6. Vorrichtung nach einem der vorhergehenden Ansprüche, **dadurch gekennzeichnet, dass** die Achse (39) ein Rohr (60) umfasst, welches zwei Abschnitte mit unterschiedlichen Durchmessern aufweist, die eine Schulter (61) in dem mittleren Teil definieren, dass diese Schulter einen ersten Anschlag für die Positionierung des Kugelgelenks (47) des mittleren Schenkels bildet, dass der Abschnitt mit kleinerem Durchmesser mit einer Muffe (63) bedeckt ist, die einen zweiten Anschlag für die Positionierung des Kugelgelenks (47) des mittleren Schenkels bildet, wobei insbesondere das Rohr, das Kugelgelenk und die Muffe durch eine axiale Bolzenverbindung (65), welche das Rohr durchgreift, zusammengefügt gehalten werden.

## Claims

1. A device for suspending an airplane turbojet, wherein said turbojet is connected to a pylon fastened to the structure of the airplane by hinged link attachments, each connecting said pylon to a casing of said turbojet, the device being **characterized in that** a said attachment comprises a support (37) for a pin that is suitable to be fastened to said pylon and comprising three spaced-apart branches (40, 41, 42) having passages (46) through which said pin (39) passes, said pin support being suitable to be fastened to said pylon in such a manner that said pin (39) is oriented generally parallel to a tangential direction of said casing, **in that** said pin is hinge-mounted by a ball joint (47) to the central branch (40) of said support, **in that** it passes through the other two branches (41, 42) with clearance, and **in that** the two above-mentioned links (30A, 30B) are arranged symmetrically about a midplane of said support and are suitable to be hinged-connected to said casing and to said pin.

2. A device according to claim 1, **characterized in that** each link (30A, 30B) is connected directly to said pin by a ball joint.

3. A device according to claim 2, **characterized in that** said ball joint (45A, 45B) providing a hinge connection of said link to said pin is situated in the vicinity of a corresponding end of this pin and on the side of one of said two other branches (41, 42) that is remote from said central branch (40) of said support.

4. A device according to any preceding claim, **characterized in that** said support (37) is defined using three substantially identical parts (50) arranged side by side, each part defining one of the above-mentioned branches.

5. A device according to any preceding claim, **characterized in that** said two passages in the two branches situated on either side of the central branch are bores and that bushings (57) of selected thickness are mounted in these bores in order to determine the desired clearance between the pin and each of these branches.

6. A device according to any preceding claim, **characterized in that** said pin (39) comprises a tube (60) having two segments of different diameters defining a shoulder (61) in the central portion, **in that** said shoulder forms a first abutment for positioning the ball joint (47) of the central branch, **in that** the smaller-diameter segment is covered by a sleeve (63) forming a second abutment for positioning said ball joint (47) of the central branch, with said tube, said ball joint and said sleeve, in particular, being held assembled together by axial bolting (65) passing through said tube.
